# EUROPÄISCHE PATENTANMELDUNG

(11) **EP 1 060 875 A2**
(43) Veröffentlichungstag der Anmeldung: **20.12.2000**
(21) Anmeldenummer: 00810117.2
(22) Anmeldetag: 10.02.2000
(51) Int. Cl.: B32B 15/08, B65D 65/40, B32B 27/08

(54) **Sterilisierbare Verbundfolie**

(30) Priorität: 15.06.1999 CH 111499
(71) Anmelder: Alusuisse Technology & Management AG, 8212 Neuhausen am Rheinfall (CH)
(72) Erfinder: Jud, Wilfried, 78224 Singen (CH); Nägeli, Hans-Rudolf, 8212 Neuhausen am Rheinfall (CH)

(57) **Zusammenfassung**

Sterilisierbare Verbundfolie zur Erzeugung von Beutelverpackungen und dergl., für beispielsweise flüssige, pastöse oder feste Nahrungsmittel. Die sterilisierbare Verbundfolien nach vorliegender Erfindung enthalten eine wasserdampf- und gasundurchlässige Sperrschicht aus einer Metallfolie und auf beiden Seiten der Sperrschicht wenigstens je eine funktionelle Schicht. Folgende Schichten sind, übereinander angeordnet, in der Verbundfolie enthalten:
a) eine erste funktionelle Schicht enthaltend eine Kunststoff-Folie aus der Reihe der Polyester, der Polyamide oder der Polyolefine oder eine Extrusionsschicht aus Polyolefinen oder eine oder mehrere Lackschichten oder Druck- und Lackschichten oderDruckschichten und
b) eine Metallfolie und
c) eine zweite funktionelle Schicht in Form einer Kunststoff-Schicht aus der Reihe der coextrusionsbeschichteten, coextrudierten oder extrusionskaschierten Polyamid/Polypropylen-Schichten, wie beispielsweise einer Folie enthaltend Polyamid / Polypropylen-Schichten oder enthaltend Polypropylen / Polyamid / Polypropylen-Schichten.

## Beschreibung

Vorliegende Erfindung betrifft eine sterilisierbare Verbundfolie, enthaltend eine wasserdampf- und gasundurchlässige Sperrschicht aus einer Metallfolie und beidseitig der Sperrschicht wenigstens je eine funktionelle Schicht, und die Verwendung der Verbundfolien.

Es sind sterilisierbare Verbundfolien, beispielsweise zur Erzeugung von Beuteln zur Verpackung von Nahrungsmitteln für Mensch und Tier bekannt. Beispielsweise werden Verbunde aus Kunststoffolien oder Kunststofflaminaten und einer wasserdampf- und gasundurchlässigen Sperrschicht in Form einer Metallfolie durch Stanzen oder Schneiden und/oder Falzen und Siegeln zu Beuteln verarbeitet. Beispielhaft für eine solche Verbundfolie steht ein vierschichtiger Verbund enthaltend nacheinander eine z.B. eine Polyester-Folie, eine Aluminiumfolie, eine orientierte Polyamidfolie und eine Polypropylenfolie. Die Polyester-Folie ergibt die Festigkeit, die Polyamidfolie wirkt stützend im Verbund und die in der Regel relativ dick gewählte Polypropylenfolie verbessert die Durchstossfestigkeit und ist zudem siegelbar. Jede der vier Schichten ist mit den benachbarten Schichten durch einen Klebstoff und fallweise einen zusätzlichen Haftvermittler und/oder Primer verbunden.

Die Erzeugung eines derartigen Verbundes ist aufwendig, da die verschiedenen Bearbeitungsschritte fallweise in unterschiedlichen Vorrichtungen durchgeführt werden müssen. Je nach Zahl und Art von Schichten bedarf es einer entsprechenden Zahl von Maschinendurchgängen. Durch die sich ergebende Zahl von klebenden Schichten können, gerade bei Sterilisationsbedingungen, leicht Delaminationen der Verbunde auftreten.

Aufgabe vorliegender Erfindung ist es, eine Verbundfolie vorzuschlagen, die einen einfachen Aufbau oder einen durch einfache Technologie herzustellenden Aufbau aufweist, die den Sterilisationsbedingungen widersteht und leicht zu Beuteln verarbeitet werden kann.

Erfindungsgemäss wird dies dadurch erreicht, dass die Verbundfolie einen Schichtaufbau aufweist, enthaltend übereinanderliegend oder nacheinander angeordnet:
a) eine erste funktionelle Schicht enthaltend eine Kunststoff-Folie aus der Reihe der Polyester, der Polyamide oder der Polyolefine oder eine Extrusionsschicht aus Polyolefinen oder eine oder mehrere Lackschichten oder Druck- und Lackschichten oder Druckschichten und
b) eine Metallfolie und
c) eine zweite funktionelle Schicht in Form einer Kunststoff-Schicht aus der Reihe der coextrusionsbeschichteten, coextrudierten und/oder extrusionskaschierten Polyamid/Polypropylen-Folien.

Bevorzugt werden sterilisierbare Verbundfolien mit einem Schichtaufbau, enthaltend nacheinander:
a) eine Kunststoff-Folie aus der Reihe der Polyester-Folien und
b) eine Metallfolie und
c) eine Kunststoff-Schicht aus der Reihe der coextrusionsbeschichteten, coextrudierten und/oder extrusionskaschierten Polyamid/Polypropylen-Folien.

Weitere bevorzugte sterilisierbare Verbundfolien nach vorliegender Erfindung sind solche, enthaltend nacheinander:
a) eine oder mehrere Lackschichten oder Druck- und Lackschichten oder Druckschichten und
b) eine Metallfolie und
c) eine Kunststoff-Schicht aus der Reihe der coextrusionsbeschichteten, coextrudierten und/extrusionskaschierten Polyamid/Polypropylen-Folien.

Die Metallfolien können beispielsweise eine Dicke von 5 bis 100 µm, zweckmässsig von 7 bis 25 µm und vorzugsweise von 7 bis 15 µm aufweisen.

Die Metallfolie kann aus Stahl, Eisen oder Kupfer sein und ist bevorzugt eine Aluminiumfolie. Die Aluminiumfolie kann aus reinem Aluminium oder zweckmässig aus einer Aluminiumlegierung der Reihen AlMn, AlFeMn, wie Alfe1,5Mn, AlFeSi oder AlFeSiMn, beispielsweise in einer Reinheit von 97,5 und höher, vorzugsweise in einer Reinheit von 98,5 und höher, sein. Die Metallfolie ist vorzugsweise eine ununterbrochene Folie, die auch texturfrei und homogen sein soll.

Die Metallfolie, resp. die Aluminiumfolie, ist entweder nicht mit einem Primer vorbehandelt oder ist beispielsweise ein- oder beidseitig mit einem Primer vorbehandelt.

Geeignete Primer können z.B. aus den Reihen der Epoxidharze oder der Polyurethane ausgewählt werden.

Bei den Kunststoff-Folien aus der Reihe der Polyester kann es sich um eine Monofolie oder um einen Folienverbund aus zwei oder mehreren Schichten handeln. Die Kunststoff-Folien aus der Reihe der Polyester können ungereckt oder axial oder biaxial gereckt sein. Die Kunststoff-Folien aus der Reihe der Polyester können beispielsweise eine Dicke von 8 bis 25 µm, zweckmässig 10 bis 18 µm und vorzugsweise von 12 µm aufweisen.

Beispiele für Kunststoff-Folien aus der Reihe der Polyester sind Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die z.B. durch ein oder zwei -0- unterbrochen sind, wie z.B. Polyethylenterephthalat (PET-Folien), Polypropylenterephthalat, Polybutylenterephthalat (Polytetramethylenterephthalat), Polydecamethylenterephthalat, Poly-1,4-cyclohexyldimethylolterephthalat oder Polyethylen-2,6-naphthalen-dicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe. Andere zweckmässige Polyester sind in der Fachwelt unter dem Kürzel PEN bekannt.

Andere Polyester sind Copolymere der Terephthalsäure und einer weiteren Polycarboxylsäure mit wenigstens einem Glykol. Zweckmässig sind dabei die Copolyester der Terephthalsäure, Ethylenglykol und einem zusätzlichen Glykol. Bevorzugt sind glykolmodifizierte Polyester, die der Fachwelt als PETG bekannt sind.

Weitere bevorzugte Polyester sind Polylalkylenterephthalate mit Alkylengruppen oder -resten mit 2 bis 4 Kohlenstoffatomen. Zu diesen Polyalkylenterephthalaten sind auch A-PET, PETP und das genannte PETG oder G-PET zu zählen. Ganz besonders bevorzugt sind Polyalkylenterephthalat-Folien des Typs PETP. Die Folien aus Polyester können unverstreckt oder mono- oder vorzugsweise biaxial orientiert sein.

Bei den Kunststoff-Folien aus der Reihe der Polyolefine es sich um eine Monofolie oder um einen Folienverbund aus zwei oder mehreren Schichten handeln. Die Kunststoff-Folien aus der Reihe der Polyolefine können unverstreckt oder axial oder biaxial gereckt sein. Die Kunststoff-Folien aus der Reihe der Polyolefine können beispielsweise eine Dicke von 8 bis 30 µm, zweckmässig 10 bis 23 µm und vorzugsweise von 12 bis 18 µm aufweisen.

Bei den Extrusionsschichten aus Polyolefinen kann es sich um eine Extrusionsschicht oder eine Coextrusionsschicht handeln. Das Flächengewicht der Extrusionsschicht oder Coextrusionsschicht kann beispielsweise von 3 bis 50 g/m², zweckmässig von 8 bis 25 g/m² und vorzugsweise von 10 bis 20 g/m², betragen.

Beispiele von Polyolefinen für die Folien oder Extrusionsbeschichtungen sind Polyethylene, wie Polyethylene niedriger, mittlerer oder hoher Dichte oder lineare Polyethylene niedriger, mittlerer oder hoher Dichte, wobei Polyethylene hoher Dichte besonders bevorzugt sind. Weitere Beispiele sind Copolymere oder Terpolymere des Ethylens mit Acrylsäure (EAA, Ethyl Acrylic Acid), des Ethylens mit Acrylestern, wie Methylacrylat (EMA), Ethylacrylat (EEA) oder Butylacrylat (EnBA), des Ethylens mit Vinylacetaten (EVA), des Ethylens mit Methylacrylsäure (EMAA) oder des Ethylens mit Ethylacrylat und Acrylsäure (EAEAA) oder Ionomerharze. Als weiteres Beispiel für ein Polyolefin sind die Polypropylene zu nennen. Das Polypropylen für Folien oder Extrusionsbeschichtungen kann ein isotaktisches, syndiotaktisches oder ataktisches Polypropylen oder ein Gemisch davon sein. Das Polypropylen kann amorph, teilkristallin, kristallin oder hochkristallin sein. Es können auch Block-Copolymere oder Random-Copolymere des Polypropylens angewendet werden. Die mittlere Molmasse kann z.B. von unter 10'000 bis zu 600'000 und höher betragen. Es können auch Copolymere, wie Ethylen/Propylen-Block- oder Multiblock-Copolymere und Polyblends, wie kautschukmodifiziertes Polypropylen, des Polypropylens eingesetzt werden. Beispielsweise können Ethylen/Propylen-Block-Copolymere bis zu 50 Gew.-% Polyethylene, wie z.B. Polyethylen hoher Dichte (HDPE), enthalten.

Die Kunststoff-Folien oder Schichten aus der Reihe der Polyamide enthalten beispielsweise Polyamid 6, ein Homopolymerisat aus ε-Caprolactam (Polycaprolactam); Polyamid 11, Polyamid 12, ein Homopolymerisat aus ω-Laurinlactam (Polylaurinlactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), sowie Gemische davon. Bevorzugt sind Polycaprolactame. Coextrudierte Schichten aus Polyamiden sind vorteilhaft unverstreckt. Folien aus Polyamiden können unverstreckt oder mono- oder biaxial orientiert sein. Die Kunststoff-Folien aus der Reihe der Polyamide können beispielsweise eine Dicke von 8 bis 50 µm, zweckmässig 10 bis 40 µm und vorzugsweise von 15 bis 25 µm, aufweisen.

Die Kunststoff-Schicht aus coextrusionsbeschichteten, coextrudiertem oder extrusionskaschiertem Polyamid/Polypropylen stellt beispielsweise eine vorfabrizierte Einheit enthaltend die zwei Polymere dar. Die Kunststoff-Folie aus coextrudiertem Polyamid/Polypropylen kann beispielsweise eine Dicke von 30 bis 125 µm, zweckmässig 50 bis 90 µm und vorzugsweise von 60 bis 80 µm aufweisen. Die Dicke der Polyamidschicht in der coextrusionsbeschichteten, coextrudierten oder extrusionskaschierten Polyamid/Polypropylen-Folie kann beispielsweise 5 bis 50 %, zweckmässig 10 bis 30 % und insbesondere 15 bis 25 % der Gesamtdicke der coextrusionsbeschichteten, coextrudierten, resp. extrusionskaschierten Folie betragen.

In zweckmässiger Ausführungsform weist die Kunststoff-Schicht, Schicht c), eine Schichtanordnung aus übereinanderliegendem coextrusionsbeschichteten, coextrudiertem und/oder extrusionskaschiertem erstem Haftvermittler / Polyamid / Haftvermittler / Polypropylen auf, wobei die Schicht c) über die freiliegende Seite der ersten Haftvermittlerschicht an der Metallfolie, Schicht b), anliegt.

In bevorzugter Ausführungsform weist die Kunststoff-Schicht, Schicht c), eine Schichtanordnung auf, übereinanderliegend, aus coextrudiertem Haftvermittler und Polyamid, extrudiertem Haftvermittler und kaschierter Polypropylen-Folie, wobei die Schicht c) über die freiliegende Seite der coextrudierten Haftvermittlerschicht an der Metallfolie, Schicht b), anliegt.

In anderer bevorzugter Ausführungsform weist die Kunststoff-Schicht, Schicht c), eine Schichtanordnung übereinander auf, aus Kaschierkleber und aufkaschiert einer Polyamid / Haftvermittler / Polypropylen-Folie, wobei die Schicht c) über die Kaschierkleberschicht an der Metallfolie, Schicht b), anliegt.

In anderer bevorzugter Ausführungsform weist die Kunststoff-Schicht, Schicht c), eine Schichtanordnung auf, aus übereinanderliegend extrudiertem erstem Haftvermittler, kaschierter Polyamid-Folie, extrudiertem Haftvermittler, kaschierter Polypropylen-Folie, wobei die erste extrudierte Haftvermittlerschicht der Metallfolie, Schicht b), anliegt.

In weiterer Ausführungsform weist die Kunststoff-Schicht, Schicht c), eine Schichtanordnung auf, aus übereinanderliegend coextrusionsbeschichtetem erstem Haftvermittler, Polyamid, Haftvermittler und Polypropylen, wobei die erste Haftvermittlerschicht der Metallfolie, Schicht b), anliegt.

Beispielsweise kann die Kunststoff-Schicht, Schicht c), eine Schichtanordnung aufweisen von übereinanderliegend dem jeweils coextrusionsbeschichteten, coextrudierten und/oder extrusionskaschierten Haftvermittler in einer Dicke von 3 bis 15 µm / Polyamid in einer Dicke von 10 bis 40 µm / Haftvermittler in einer Dicke von 3 bis 15 µm / Polypropylen in einer Dicke von 30 bis 70 µm.

Die Reihe der Polyamid/Polypropylen-Folien kann weitere Varianten umfassen, die zu sterilisierbaren Verbundfolien nach vorliegender Erfindung führen, wobei die Verbundfolie einen Schichtaufbau aufweist, enthaltend übereinander angeordnet, resp. nacheinander:
a) eine erste funktionelle Schicht enthaltend eine Kunststoff-Folie aus der Reihe der Polyester, Polyamide oder der Polyolefine oder eine Extrusionsschicht aus Polyolefinen oder eine oder mehrere Lackschichten oder Druck- und Lackschichten oder Druckschichten und
b) eine Metallfolie und
c) eine Kunststoff-Schicht mit einer Schichtanordnung aus coextrusionsbeschichtetem, co-extrudiertem und/oder extrusionskaschiertem Polypropylen/Polyamid/Polypropylen.

Zweckmässig als Schicht c) ist eine Kunststoff-Folie mit einer Schichtanordnung aus, übereinanderliegend angeordnet, coextrusionsbeschichtetem oder coextrudiertem und/oder extrusionskaschiertem Polypropylen / Haftvermittler / Polyamid / Haftvermittler / Polypropylen.

Bevorzugt als Schicht c) ist eine Schichtanordnung aus, übereinander angeordnet, Kaschierkleber und aufkaschiert einer Polypropylen / Haftvermittler / Polyamid / Haftvermittler / Polypropylen-Folie, wobei die Schicht c) über die Kaschierkleberschicht an der Metallfolie, Schicht b), anliegt.

Auch bevorzugt als Schicht c) ist eine Schichtanordnung aus, übereinander angeordnet, coextrusionsbeschichtetem Polypropylen, Haftvermittler, Polyamid, Haftvermittler und Polypropylen, wobei die erste Polypropylenschicht der Metallfolie, Schicht b), anliegt.

Bevorzugt als Schicht c) ist eine Kunststoff-Schicht mit einer Schichtanordnung aus jeweils coextrusionsbeschichtetem, coextrudiertem und/oder extrusionskaschiertem Polypropylen in einer Dicke von 10 bis 20 µm / Haftvermittler in einer Dicke von 3 bis 15 µm / Polyamid in einer Dicke von 10 bis 40 µm / Haftvermittler in einer Dicke von 3 bis 15 µm / Polypropylen in einer Dicke von 30 bis 70 µm.

Zwischen der Kunststoff-Schicht, Schicht c), und der Metallfolie, Schicht b), kann ein Haftvermittler, beispielsweise in einer Dicke von 3 bis 15 µm, angeordnet sein. Anstelle eines Haftvermittlers, beispielsweise beim Vorliegen einer vorgefertigten Schicht c) oder einer Polyamid- oder Polypropylenfolie, kann die Schicht c) als ganze Schicht oder die betreffende, der Schicht c) zugehörige Folie, mittels eines Kaschierklebers auf die Metallfolie, Schicht b) kaschiert werden.

Die Folien aus dem coextrudierten Polyamid/Polypropylen können unverstreckt sein oder können mono- oder vorzugsweise biaxial orientiert sein.

Beispiele von Polypropylenen und Polyamiden in der Kunststoff-Folie aus coextrudiertem Polyamid/Polypropylen können den oben angeführten Aufzählungen entnommen werden.

Bei Schichten aus z.B. coextrudiertem Polyamid/Polypropylen ist in der Regel gegen die Innenseite resp. den Inhalt, bezogen auf einen Verpackungsbehälter aus der erfindungsgemässen Verbundfolie, gerichtet. Sinngemäss ist die Polyamidschicht gegen die Metallfolie gerichtet oder auf die Metallfolie kaschiert.

Vorliegende Verbundfolien können über die aussenliegende Polypropylenschicht der coextrudierten Folie gesiegelt werden. Fallweise, um die Siegeleigenschaften weiter zu steuern, kann auf dem Polypropylen, wie auch auf der anderen freien Seite der Verbundfolie, z.B. der Lackschicht oder der Polyester, Polyamid- oder Polyolefinfolie oder der Polyolefinschicht, Siegelschichten, wie Siegelfolien, Heisssiegellacke oder Siegellacke, z. B. auf Basis von Polyolefinen, wie Polyethylenen, Co- und Terpolymere des Ethylens mit Acrylsäure (EAA, Ethyl Acrylic Acid), des Ethylens mit Acrylestern, wie Methylacrylat (EMA), Ethylacrylat (EEA) oder Butylacrylat (EnBA), des Ethylens mit Vinylacetaten (EVA), des Ethylens mit Methylacrylsäure (EMAA), des Ethylens mit Ethylacrylat und Acrylsäure (EAEAA) oder Ionomerharze, allein oder im Gemisch, Polypropylenen, und Mischungen davon, ferner Polyacrylaten, PVC-Harzen, Polyvinylidenchloriden, EVA, Polyalkylenterephthalaten, insbesondere des Types A-PET, usw. aufgebracht sein. Die freie Seite, insbesondere der Polyesterfolien, können mit EVA (Ethylen/Vinylalkohol-Copolymer) oder einer amorphen Polyester-Siegelschicht des Types PET-A beschichtet sein. Besonders bevorzugt sind Polypropylene und Polyethylenterephtalate.

Die einzelnen Schichten, d.h. die erste funktionelle Schicht und dabei insbesondere die Kunststoff-Folie a) aus der Reihe der Polyester-Folien, der Polyamid-Folien oder der Polyolefin-Folien oder Polyolefin-Schichten, gegen die Metallfolie und/oder die zweite funktionelle Schicht (Schicht c) )gegen die Metallfolie sowie fallweise die einzelnen Lagen der zweiten funktionellen Schicht, Schicht c), unter sich und allfällige auf die freien Seiten der Verbundfolie zu liegen kommende Siegelfolien, können mittels eines Haftvermittlers und/oder Kaschierklebers miteinander verbunden werden.

Geeignete Kaschierkleber können lösungsmittelhaltig oder lösungsmittelfrei und auch wasserhaltig sein. Beispiele von Kaschierklebern sind lösungsmittelhaltige, lösungsmittelfreie oder wässrige Acrylatkleber oder Polyurethan-Kleber-Systeme. Aber auch Klebstoffe welche unter Einwirkung von energiereicher Strahlung (z.B. UV; Elektronen-Strahlen) aushärten, können eingesetzt werden. Im Hinblick auf die bevorzugte Verwendung des Verbundmaterials im Bereich der Nahrungsmittel sind physiologisch unbedenkliche Klebstoffsysteme zu bevorzugen. Besonders geeignete Klebstoffsysteme sind aliphatische Systeme.

Als Haftvermittler können beispielsweise Produkte auf Basis von Maleinsäure und modifiziertem Polypropylen oder Polyethylen eingesetzt werden.

Der Kaschierkleber kann z.B. durch Giessen, Streichen, Sprühen, Rakeln, Glatt-Walzenauftrag usw., aufgetragen werden.

Der Kaschierkleber, wie auch der Haftvermittler, kann beispielsweise in Mengen von 0,5 bis 10 g/m² vorzugsweise in Mengen von 1 bis 8 g/m² und insbesondere in Mengen von 2 bis 6 g/m² angewendet werden. Die Kaschierkleber, wie auch der Haftvermittler, können auch in solchen Mengen angewendet werden, dass sie beispielsweise Schichten von 0,1 µm, vorzugsweise 3,0 µm, bis 15 µm Dicke ausbilden.

Die Oberfläche der Metallfolie kann durch entsprechende Vorbehandlung (z.B. bürsten, chromatieren, Ionisierungs-, Ozon-, Korona-, Flamm- oder Plasmabehandlung) eine verbesserte Haftung für den Kleber oder Lack oder für eine Extrusionsschicht aufweisen. Zur Unterstützung und Verbesserung der Verbundhaftung der Lacke, Haftvermittler oder Kaschierkleber zwischen den Kunststoffolien oder von extrudierten Schichten, ist es oft zweckmässig den Folien auf den kleberzugewandten Seiten oder den Extrudaten eine ausreichende Oberflächenspannung zu vermitteln. Die Erhöhung der Oberflächenspannung kann vorzugsweise durch eine Ionisierungs-, Ozon-, Plasma-, Flamm- oder eine Koronavorbehandlung erfolgen.

Es kann auch vorteilhaft sein, die erste und/oder die zweite funktionelle Schicht, jeweils mit der Metallfolie, ohne Kaschierkleber und/oder Haftvermittler, nur unter Druck und Wärmeeinwirkung, mit der Metallfolie zu verbinden.

In einer möglichen Ausführungsform kann beispielsweise die Kunststoff-Folie a) aus der Reihe der Polyester- oder Polyamidfolien auf der Metallfolien zugewandten Seite einen Konterdruck aufweisen. Ein Konterdruck ist besonders für durchsichtige und durchscheinende Folien geeignet. Es ist auch möglich die Polyester-, Polyamid- oder Polyolefinfolie oder Extrusionsschicht aus Polyolefinen auf deren Aussenseite mit einem Druckmuster zu versehen und fallweise das Druckmuster mit einem Lack abzudecken.

Auf der Aussenseite oder gegen die Aussenseite gerichtet, jeweils auf einen Verpackungsbehälter aus der erfindungsgemässen Verbundfolie bezogen, können die Verbundfolien als erste funktionelle Schicht a) eine oder mehrere Lackschichten oder Lack- und Druckschichten enthalten. Mit Druckschichten sind insbesondere durch ein Druckverfahren erzeugten Materialauftrag, der teil- oder ganzflächig erfolgen kann, umfasst.

Als Schutzlacke bzw. Druckvorlacke, Druckfarben und wenn benötigt Drucküberlacke, kommen beispielsweise in Frage:

Systeme auf Lösemittelbasis (1) oder Systeme mit Wasser als Lösemittel (2) oder Systeme die durch UV-, oder andere energiereiche Strahlung getrocknet bzw. gehärtet werden (3). Als lösemittelgelöste Druckvor- und Drucküberlacke (1) können Lacke mit der Bindemittelbasis Polyacrylat, Polymethacrylat, Polyester, Epoxid, Zellulosenitrat, Polyvinylchlorid, Polyvinylbutyral oder Mischungen aus diesen Bindemitteln, gehärtet mit Melaminharzen, Harnstoffharzen, Polyisocyanaten oder Polyaziridinen oder Mischungen aus diesen, gegebenenfalls unter Mitverwendung von Säuren, Aminen, Kalzium-, Zinnverbindungen als Härtungsbeschleuniger und Silanen, Titan- oder Zirkonchelaten als haftungsfördernde Zusätze, eingesetzt werden.

Die entsprechenden Druckfarben können analog aufgebaut sein oder sind häufig aus nichthärtenden Harzen, z.B. Polyvinylbutyral oder Zellulosenitrat, formuliert.

Wässrige Systeme (2) enthalten z.B. zusätzlich noch Tenside um die Löslichkeit zu gewährleisten. Als UV- und strahlenhärtende Druckfarben und Drucküberlacke (3) können radikalisch vernetzende Farben und Überlacke auf Basis von Acrylaten auf konventionellen, wie oben beschriebenen Druckvorlacken, sowie nach kationischem Mechanismus vernetzende Druckfarben auf, wie oben beschriebenen, Druckvorlacken oder UV- oder strahlenhärtende, nach kationischem Mechanismus vernetzenden, Druckvorlacken verwendet werden.

Die Lackschicht oder -schichten können durch Giessen, Streichen, Sprühen, Rakeln, Glatt-Walzenauftrag usw., beispielsweise in einer Menge von jeweils 0,5 bis 10 g/m² und insbesondere von 1,0 bis 5 g/m², aufgebracht werden.

Werden ausser der oder den Lackschichten oder Extrusionsbeschichtungen noch Druckschichten oder Druckschichten allein angewendet, so kann das Bedrucken der Verbundfolie mit allen bekannten Druckverfahren vorgenommen werden, so z.B. Buch-, Offset-, Flexo-, Sieb-, Helio- und Kupfertiefdruck. Die Wahl, welches Druckverfahren zur Anwendung kommt hängt von der gewünschten Druckqualität, von den jeweiligen technischen Gegebenheiten und der Auflagenhöhe ab. Es ist möglich ein- oder mehrfarbige Druckschichten teil- oder vollflächig aufzubringen. Bevorzugt ist der Flexodruck (auch Anilin- oder Gummidruck genannt) und der Tiefdruck, wie Kupfertiefdruck, oder der Heliodruck. Die Bedrukkung liegt auf der nach aussen weisenden Seite des Verbundmaterials und kann beispielsweise zusätzlich mittels wenigstens einer weiteren Lackschicht überlackiert sein. Beispielsweise können eine, zwei, drei oder mehrere Lackschichten übereinander angewendet werden, wobei die erste Lackschicht auf die Metallfolie oder die vorbehandelte Metallfolie zu liegen kommt. In anderer Ausführungsform kann die Bedruckung direkt auf die Metallfolie oder die vorbehandelte Metallfolie zu liegen kommen und die Bedruckung kann gegebenenfalls durch eine, zwei oder mehrere Lackschichten überdeckt werden. Letztere Lackschichten sind vorteilhart transparent oder durchscheinend und stellen auch Schutzschichten für die Bedruckung dar. Die Bedruckung kann auch in mehreren Schichten erfolgen und wenigstens eine Druckschicht kann vollflächig sein, so dass diese vollflächige Druckschicht oder Druckschichten wie eine Lackschicht wirkt. In weiterer Ausführung kann die Metallfolie oder vorbehandelte Metallfolie mit einer oder mehreren Lackschichten überlackiert werden. Auf diese Lackschicht oder -schichten kommt eine ganz- oder teilflächige, ein- oder mehrfarbige Bedruckung zu liegen und diese Bedruckung kann fallweise mit einer oder mehreren, insbesondere transparenten oder durchscheinenden Lackschichten überdeckt werden.

Es kann gegebenenfalls auch die Innenseite des vorliegenden Verbundes mit einem Lack und/oder einem Druck versehen werden.

Die Erzeugung der erfindungsgemässen Verbundfolie kann auf einfache Weise und wenige Verfahrensschritte erfolgen. Die zweite funktionelle Schicht c) aus Polypropylen/Haftvermittler/Polyamid wird beispielsweise durch Coextrusion oder Extrusionskaschierung erzeugt und zur Verarbeitung bereitgestellt. Auf einer Seite der Metallfolie wird die erste funktionelle Schicht a) in Form einer Polyester-Folie, z.B. mittels eines Kaschierklebers, aufkaschiert oder als Extrusionsbeschichtung oder in einem ein- oder mehrstufigen Lackierverfahren und/oder Druckverfahren die Lackschicht oder -schichten, die Druckschicht oder -schichten oder Lack- und Druckschichten oder als Extrusionsbeschichtung und darüberliegende Druckschichten aufgebracht. Anschliessend kann das Kaschieren der zweiten funktionellen Schicht c) auf der noch freien Seite der Metallfolie erfolgen. Die Reihenfolge der Kaschierverfahren, resp. des Lackierens und Bedruckens, können sinngemäss auch in geänderter Reihenfolge ausgeführt werden.

Die Schicht c) in Form einer Kunststoff-Folie des Aufbaues Polyamid / Haftvermittler / Polypropylen ist beispielsweise herstellbar durch Coextrusion, wie 3-Schichtblasextrusion oder eine 3-fache Extrusionskaschierung oder durch Coextrusionsbeschichten. Eine derartige Folie kann beispielsweise über einen Haftvermittler oder insbesondere einen Kaschierkleber auf einer Seite der Metallfolie, Schicht b), aufgebracht werden. Es ist auch möglich, die Schicht c) direkt auf die Metallfolie durch Coextrusionsbeschichten aufzubringen.

Die Schicht c) in Form einer Kunststoff-Folie des Aufbaues Polypropylen / Haftvermittler / Polyamid / Haftvermittler / Polypropylen ist beispielsweise herstellbar durch Coextrusion, wie 5-Schichtblasextrusion oder eine mehrfache, z.B. 5-fache, Extrusionskaschierung oder durch Coextrusionsbeschichten. Eine derartige Folie kann beispielsweise über einen Haftvermittler oder insbesondere einen Kaschierkleber auf einer Seite der Metallfolie, Schicht b), aufgebracht werden. Es ist auch möglich, die Schicht c) direkt auf die Metallfolie durch Coextrusionsbeschichten aufzubringen.

In anderer Herstellungsweise können beispielsweise auf einer Seite der Metallfolie, Schicht b), ein erstes Coextrudat aus Haftvermittler und Polyamid aufgebracht werden und auf die freie Seite des Polyamids wird ein weiteres Coextrudat aus Haftvermittler und Polypropylen aufgebracht, wobei das Polypropylen dann die freiliegende Aussenseite bildet.

In wieder anderer Herstellungsweise können beispielsweise auf einer Seite der Metallfolie, Schicht b), ein erstes Coextrudat aus Haftvermittler und Polyamid aufgebracht werden und auf die freie Seite des Polyamids wird mittels Extrusionskaschierung eines Haftvermittler eine Polypropylenfolie als die aussenliegende Schicht aufgebracht.

In weiterer Herstellungsweise können beispielsweise auf einer Seite der Metallfolie, Schicht b), ein erster Haftvermittler, das Polyamid, auf die freie Seite des Polyamids ein zweiter Haftvermittler und anschliessend das Polypropylen durch Giessen oder Extrudieren nacheinander aufgebracht werden, wobei das Polypropylen die freiliegende Aussenseite bildet.

Vorliegende Erfindung betrifft auch Beutelverpackungen aus einer sterilisierbaren Verbundfolie nach vorliegender Erfindung. Beutelverpackungen können beispielsweise aus aus einem Abschnitt des Verbundmaterials durch Falten und Siegeln oder aus zwei Seitenteilen aus dem vorliegenden Verbundmaterial durch -- gegebenenfalls Falten und -- Siegeln oder aus mehreren Seitenteilen aus dem Verbundmaterial durch -- gegebenenfalls Falten und -- Siegeln, geformt werden. Typische Beutel sind Flachbeutel, Standbeutel, Siegelrandbeutel, Raumbeutel, standfähige Raumbeutel, Seitenrand-Flachbeutel, Klotzbodenbeutel, oder auch Säcke, wie geschweisste Flach- oder Faltensäcke, usw. Die Beutelverpackungen ihrerseits können für Füllgüter, wie stückige, breiige, pastöse, halbflüssige oder flüssige Nahrungsmittel für Mensch und Tier oder für Genussmittel verwendet werden. Weitere beispielhafte Anwendungen derartiger Beutel sind Kosmetika oder Körperpflegemittel in pastöser bis flüssiger Form. Andere Beispiele sind pharmazeutische Produkte oder Heilmittel. Die Verbundfolien nach vorliegender Erfindung sind ohne Delamination der einzelnen Schichten oder Festigkeitsverlust, sterilisierbar, beispielsweise durch eine Hitzebehandlung bei 110 bis 130°C, vorzugsweise 121°C, während 10 bis 60 Minuten, vorzugsweise 30 Minuten.

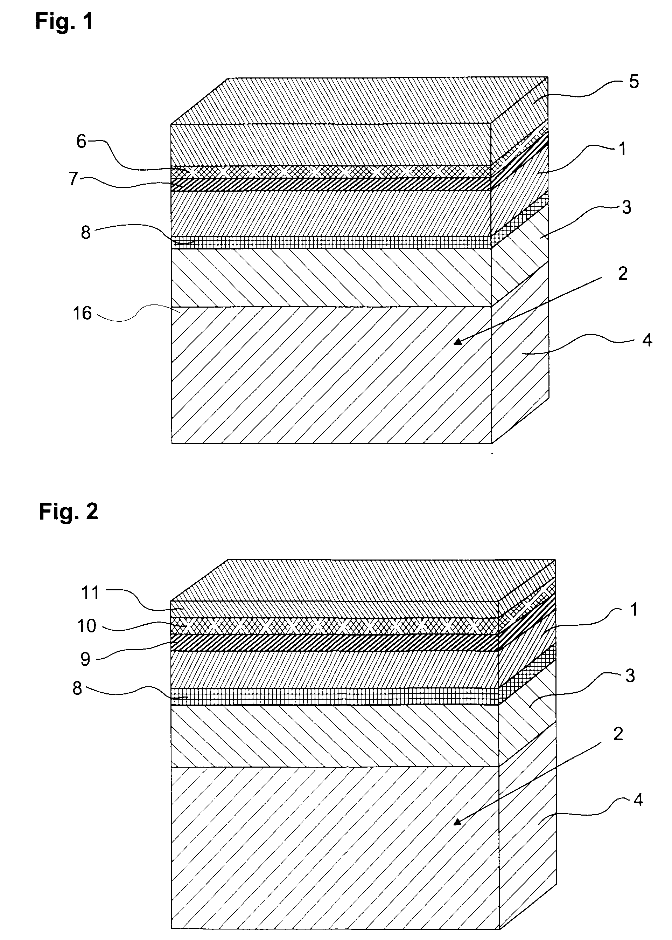

Die Figuren 1 bis 3 zeigen schematisch und beispielhaft den Aufbau von erfindungsgemässen Verbundfolien.

Die Verbundfolie gemäss Fig. 1 weist eine Metallfolie 1 auf. Auf einer Seite der Metallfolie 1 ist die erste funktionelle Schicht in Form z.B. einer PETP-Folie 5 mittels des Kaschierklebers 7 aufkaschiert. Beispielhaft trägt die PETP-Folie 5 einen Konterdruck 6. Auf der anderen Seite ist die Metallfolie 1 die zweite funktionelle Schicht 2 in Form einer Coextrusionsfolie aus Polyamid 3 und Polypropylen 4 über einen Kaschierkleber 8 kaschiert. Bei der Anwendung der Verbundfolie ist das Polypropylen 4 der coextrudierten Folie 2 gegen den Inhalt in der aus der Verbundfolie hergestellten Verpackung gerichtet.

Die Verbundfolie gemäss Fig. 2 weist eine Metallfolie 1 auf. Auf einer Seite der Metallfolie 1 list die erste funktionelle Schicht in Form von Druck- und Lackschichten angeordnet. Auf der Metallfolie ist ein Vorlack 9, darauf der Oberflächendruck 10 und schliesslich darauf der Schutzlack 11 aufgebracht. Auf der anderen Seite der Metallfolie 1 ist die zweite funktionelle Schicht 2 in Form einer Coextrusionsfolie aus Polyamid 3 und Polypropylen 4 über einen Kaschierkleber 8 aufkaschiert. Auch bei dieser Anwendung der Verbundfolie ist das Polypropylen 4 des Coextrudates 2 gegen den Inhalt in der aus der Verbundfolie hergestellten Verpackung gerichtet.

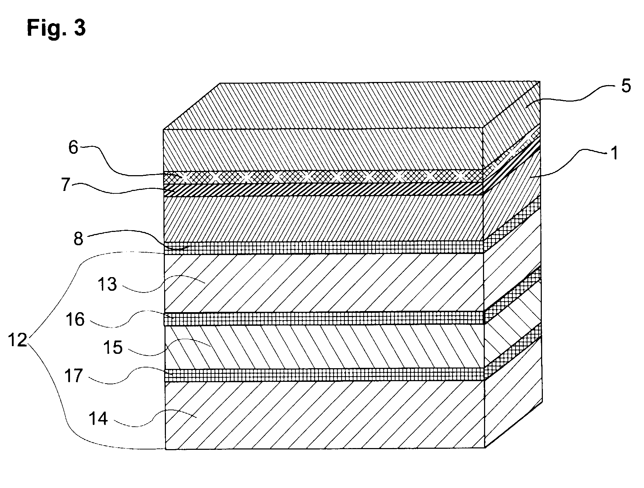

Die Verbundfolie gemäss Fig. 3 weist eine Metallfolie 1 auf. Auf einer Seite der Metallfolie 1 ist die erste funktionelle Schicht in Form z.B. einer PETP-Folie 5 mittels des Kaschierklebers 7 aufkaschiert. Beispielhaft trägt die PETP-Folie 5 einen Konterdruck 6. Auf der anderen Seite ist die Metallfolie 1 die zweite funktionelle Schicht 2 in Form einer KunststoffFolie 12 mit einer Schichtanordnung aus coextrudiertem und/oder extrusionskaschiertem Polypropylen 13 / Haftvermittler 16 / Polyamid 15 / Haftvermittler 17 / Polypropylen 14 über einen Kaschierkleber 8 kaschiert.

## Patentansprüche

1. Sterilisierbare Verbundfolien, enthaltend eine wasserdampf- und gasundurchlässige Sperrschicht aus einer Metallfolie und auf beiden Seiten der Sperrschicht wenigstens je eine funktionelle Schicht,
dadurch gekennzeichnet, dass
die Verbundfolie einen Schichtaufbau aufweist, enthaltend übereinander angeordnet:
a) eine erste funktionelle Schicht enthaltend eine Kunststoff-Folie aus der Reihe der Polyester, der Polyamide oder der Polyolefine oder eine Extrusionsschicht aus Polyolefinen oder eine oder mehrere Lackschichten oder Druck- und Lackschichten oder Druckschichten und
b) eine Metallfolie und
c) eine zweite funktionelle Schicht in Form einer Kunststoff-Schicht aus der Reihe der coextrusionsbeschichteten, coextrudierten und/oder extrusionskaschierten Polyamid/Polypropylen-Folien.

2. Sterilisierbare Verbundfolien nach Anspruch 1, dadurch gekennzeichnet, dass die Kunststoff-Schicht, Schicht c), eine Schichtanordnung aus coextrusionsbeschichtetem, coextrudiertem und/oder extrusionskaschiertem Haftvermittler / Polyamid / Haftvermittler / Polypropylen aufweist, wobei die Schicht c) über die freiliegende Seite der ersten Haftvermittlerschicht an der Metallfolie, Schicht b), anliegt.

3. Sterilisierbare Verbundfolien nach Anspruch 2, dadurch gekennzeichnet, dass die Kunststoff-Schicht, Schicht c), eine Schichtanordnung übereinander aufweist, aus co-extrudiertem Haftvermittler und Polyamid und extrudiertem Haftvermittler und kaschierter Polypropylen-Folie, wobei die Schicht c) über die freiliegende Seite der coextrudierten Haftvermittlerschicht an der Metallfolie, Schicht b), anliegt.

4. Sterilisierbare Verbundfolien nach Anspruch 1, dadurch gekennzeichnet, dass die Kunststoff-Schicht, Schicht c), eine Schichtanordnung übereinander aufweist, aus Kaschierkleber und aufkaschiert einer Polyamid / Haftvermittler / Polypropylen-Folie, wobei die Schicht c) über die Kaschierkleberschicht an der Metallfolie, Schicht b), anliegt.

5. Sterilisierbare Verbundfolien nach Anspruch 2, dadurch gekennzeichnet, dass die Kunststoff-Schicht, Schicht c), eine Schichtanordnung übereinander aufweist, aus extrudiertem Haftvermittler, kaschierter Polyamid-Folie, extrudiertem Haftvermittler und kaschierter Polypropylen-Folie, wobei die erste extrudierte Haftvermittlerschicht der Metallfolie, Schicht b), anliegt.

6. Sterilisierbare Verbundfolien nach Anspruch 2, dadurch gekennzeichnet, dass die Kunststoff-Schicht, Schicht c), eine Schichtanordnung übereinander aufweist, aus coextrusionsbeschichtetem Haftvermittler, Polyamid, Haftvermittler und Polypropylen, wobei die erste Haftvermittlerschicht der Metallfolie, Schicht b), anliegt.

7. Sterilisierbare Verbundfolien nach Anspruch 2, dadurch gekennzeichnet, dass die Kunststoff-Schicht, Schicht c), eine Schichtanordnung von coextrusionsbeschichtetem, coextrudiertem und/oder extrusionskaschiertem Haftvermittler in einer Dicke von 3 bis 15 µm / Polyamid in einer Dicke von 10 bis 40 µm / Haftvermittler in einer Dicke von 3 bis 15 µm / Polypropylen in einer Dicke von 30 bis 70 µm aufweist.

8. Sterilisierbare Verbundfolien nach Anspruch 1, dadurch gekennzeichnet, dass die Verbundfolie einen Schichtaufbau aufweist, enthaltend nacheinander:
a) eine erste funktionelle Schicht enthaltend eine Kunststoff-Folie aus der Reihe der Polyester, der Polyamide oder der Polyolefine oder eine Extrusionsschicht aus Polyolefinen oder eine oder mehrere Lackschichten oder Druck- und Lackschichten oder Druckschichten und
b) eine Metallfolie und
c) eine Kunststoff-Schicht mit einer Schichtanordnung aus coextrusionsbeschichtetem, coextrudiertem und/oder extrusionskaschiertem Polypropylen / Polyamid / Polypropylen.

9. Sterilisierbare Verbundfolien nach Anspruch 8, dadurch gekennzeichnet, dass die Schicht c) eine Kunststoff-Folie ist, mit einer Schichtanordnung aus coextrusionsbeschichtetem, coextrudiertem und/oder extrusionskaschiertem Polypropylen / Haftvermittler / Polyamid / Haftvermittler / Polypropylen.

10. Sterilisierbare Verbundfolien nach Anspruch 8, dadurch gekennzeichnet, dass die Kunststoff-Schicht, Schicht c), eine Schichtanordnung übereinander aufweist, aus Kaschierkleber und aufkaschiert einer Polypropylen / Haftvermittler / Polyamid / Haftvermittler / Polypropylen-Folie, wobei die Schicht c) über die Kaschierkleberschicht an der Metallfolie, Schicht b), anliegt.

11. Sterilisierbare Verbundfolien nach Anspruch 8, dadurch gekennzeichnet, dass die Kunststoff-Schicht, Schicht c), eine Schichtanordnung übereinander aufweist, aus coextrusionsbeschichtetem Polypropylen, Haftvermittler, Polyamid, Haftvermittler und Polypropylen, wobei die erste Polypropylenschicht der Metallfolie, Schicht b), anliegt.

12. Sterilisierbare Verbundfolien nach Ansprüchen 8, dadurch gekennzeichnet, dass die Schicht c) eine Kunststoff-Schicht ist, mit einer Schichtanordnung aus coextrusionsbeschichtetem oder coextrudiertem und/oder extrusionskaschiertem Polypropylen in einer Dicke von 10 bis 20 µm/Haftvermittler in einer Dicke von 3 bis 15 µm /Polyamid in einer Dicke von 10 bis 40 µm /Haftvermittler in einer Dicke von 3 bis 15 µm /Polypropylen in einer Dicke von 30 bis 70 µm.

13. Sterilisierbare Verbundfolien nach Anspruch 1, dadurch gekennzeichnet, dass zwischen der Kunststoff-Schicht, Schicht c), und der Metallfolie, Schicht b), ein Kaschierkleber in Mengen von 0,5 bis 10 g/m², vorzugsweise 1 bis 6 g/m², oder ein Haftvermittler, vorzugsweise in einer Dicke von 0,5 bis 15 µm, vorzugsweise 3 bis 15 µm, angeordnet ist.

14. Beutelverpackungen aus einer sterilisierbaren Verbundfolie nach Anpruch 1.
